# EUROPEAN PATENT SPECIFICATION

(11) **EP 0 737 094 B1**
(45) Date of publication and mention of the grant of the patent: **04.03.1998**
(21) Application number: 95905251.5
(22) Date of filing: 23.12.1994
(51) Int. Cl.: B01D 53/14, C10L 3/10

(54) **PURIFICATION OF NATURAL GAS**
REINIGUNG VON ERDGAS
PURIFICATION DU GAZ NATUREL

(30) Priority: 27.12.1993 NO 934854; 02.09.1994 NO 943248
(43) Date of publication of application: 16.10.1996
(73) Proprietor: NORSK HYDRO ASA, 0240 Oslo (NO)
(72) Inventor: EIMER, Dag, Arne, N-3931 Porsgrunn (NO); ANDERSSON, Gry, N-0254 Oslo (NO)
(74) Representative: Bleukx, Luc
(86) International application number: NO9400213
(87) International publication number: WO9517948

(56) References cited:
- EP-A- 0 127 206
- Derwent's abstract, No 92-5208/01, week 9201, ABSTRACT OF SU, 1223734 (MINNIBAEV GAS PROC), 30 January 1991 (30.01.91)

## Description

The present invention relates to purification of natural gas to make it comply with gas or pipeline sales specifications. This implies that water dew points of the gas shall be within 0 to -18°C and H₂S content shall be less than 4 ppm by volume.

In particular the invention relates to natural gas where the content of H₂S is a few hundred ppm or less. This is typical for gas produced in association with oil production where sea water has been injected in the reservoir to enhance oil production.

Improved methods for purification of natural gas with regard to H₂S has lately become increasingly important. This is partly due to the fact that the gas from many of the new fields contains more H₂S than older ones, but also that water is injected into the old fields to enhance oil production. The injected water might contain bacteria which causes/increases the H₂S formation in the associated gas.

From Kohl and Riesenfeld's book "Gas Purification" it is known that H₂S may be removed in several ways. Advanced absorption-desorption systems using a variety of amine solutions may be installed, but such plants are large and expensive, and they do not solve the problem of the final deposition of H₂S or its sulphur content. Conversion of H₂S to S in a Claus plant is in principle feasible, but such plants are large and very difficult to operate when only small amounts of H₂S are to be converted and the concentration is low (see e.g. EP-A-0 127 206). Direct oxidation of H₂S to S using iron complexes as exemplified in the Stretford process is also possible, but these plants are also large and expensive and accordingly not suitable for offshore installations. H₂S can also be adsorbed on activated carbon or zinc oxide. Such plants would be smaller than the plants already mentioned, but require the gas to be at an elevated temperature to help the conversion to sulphide, and in the end they require handling of large amounts of spent adsorbent material representing a disposal problem.

Further, it is also known from said "Gas Purification" a process for removal of acid gases using water-glycol-amine as s absorption solution. This is first described in a patent by Hutchinson (US-A-2,177,068), but this process uses too much water in the lean solution to enable drying of natural gas to dew points below 0°C. It is further mentioned by Kuliev et al in Soviet patent SU-B-822856-, how certain solvents, among them some glycols, are added to aqueous amine solutions to enhance the absorption of H₂S and CO₂, but the indicated water content would make the solvent unable to effect desired water removal. Gazzi et al, IT-A-023739, discusses improving the selectivity with respect to H₂S by using amine and non-aqueous solvent, but this is a process that is specifically dedicated to acid gas removal with no attention being paid to the removal of water.

It is also known from the literature ("Gas Purification") that absorption processes such as "Selexol" and "Sepasolv", based on polyglycol ethers with no amine added, have some ability for water removal, but these processes are not used for drying of natural gas. Applying physical solvents, these processes are particularly suitable for bulk removal of CO₂ and/or H₂S, but are not, however, economic for removal of H₂S down to the lower ppm levels.

The main object of the present invention was to arrive at an improved process for removing both minor amounts of H₂S and water from natural gas, especially from offshore fields. The new process should not possess the limitations and disadvantages of the above referred known processes.

Another object was to arrive at a process that made it possible to dispose of the sulphur content removed from the gas in an environmentally acceptable manner.

A further object was to arrive at an integrated process for simultaneous removal of H₂S and water and disposal of the sulphur compound removed from the gas.

Having studied thoroughly known processes and trying to combine the development of a new process with the requirements for a low-cost process, the inventors started by proposing to utilize existing equipment for water removal from the gas. Usually this removal is performed by glycol. The idea was to also use the glycol absorbent to remove the H₂S from the gas. One reason for trying this was that most facilities like off shore oil or gas platforms already are equipped with such a dehydration process. In the case of new installations this is equipment that would be installed anyway and some freedom in design is possible. It soon became clear that some modifications would be necessary. It was then proposed alterations comprising addition of an alkanolamine to the triethylene glycol (TEG) that is used as a desiccant. Extra stripping gas should be used in the regeneration equipment. As stripping gas any gas except air or oxygen would in principle be applicable. Natural gas or methane would in most cases be preferred because it is readily available. Nitrogen, if available, would also be a most useful stripping gas. The used stripping gas containing water and H₂S will be piped to a combustion chamber where the H₂S is converted to SO₂. The exhaust gas from this combustion can then be contacted with sea water where SO₂ is absorbed and instantaneously converted to sodium sulphite. This sulphite will in turn be converted to sulphate using oxygen in the sea water where the wash stream is disposed of. The chemical oxygen demand is negligible compared to the oxygen content in coastal regions and at sea. Accordingly, no extra supply of oxygen would be necessary for converting the sulphur compound to a disposable compound.

However, it was found that by using methyldietanolamine-triethyleneglycol (MDEA-TEG) mixtures for absorbent , the circulation rate of the absorbent had to be increased in order to achieve desired removal of H₂S from the natural gas. Though this increase would be possible to handle by the existing absorption column, further improvement of the process would be advantageous.

When a new process is planned for use in existing equipment, it should necessitate as few modifications as possible. In the present case, the absorbent circulation rate is limited by the circulation pump. This pump is small and may be changed, wholly or in part, without unacceptable problems. Further increase of this liquid rate may require changing of liquid distributor in the column or piping. Accordingly it is desired to keep the circulation rate down, or within the limitations of the existing equipment. The more alterations required, the less acceptable the new process will be.

The inventors first investigated the possible effect on the circulation rate by changing the alkanolamine used in TEG to monoethylamine (MEA), 2-amino-2-methyl-1-propanol (AMP) or diethyleneglycol (DEA). Application of these alkanolamines increased the absorption capacity of the solution, but not sufficiently to avoid increasing the circulation rate relative to that experienced when removing water only.

Changing of the glycol component of the mixture was then investigated and it was found that if TEG was substituted with diethyleneglycol (DEG) and the same amines were applied, it would be possible to obtain significant removal of H₂S from the raw gas. Useful reduction of H₂S could be obtained using an amine-DEG mixture without increasing the circulation rate beyond what is normally used for water removal. But even when the primary amines AMP and MEA were applied, it was not possible to achieve complete removal at all H₂S con-centrations in the raw gas without increasing the circulation rate even if circulation needs were reduced compared with TEG based solutions.

The next step in the investigations for an optimal system was to substitute TEG with monoethyleneglycol (MEG) in admixture with MDEA, DEA, MEA, AMP or TEA (triethanolamine). The results of these investigations showed that the absorption power of these latter solutionswere that much higher than for the DEG or TEG-based systems that H2S could be removed down to a concentration of 2-4 ppm from an initial concentration of several hundred ppm in the gas to be treated without increasing circulation rates.

Further investigation showed that mixtures of the above stated amines with MEG would also be applicable for obtaining the desired H₂S removal. Though MEG is the preferred glycol, mixture of MEG with some TEG and/or DEG would be applicable. Equally, the amines may be mixed as long as sufficient quantity of really active amine is active.

Investigations with regard to the concentration of amine in glycol for useful absorbent mixtures showed that 0.2-2.5 M amine in glycol should be used. Preferred concentrations would be 0.5-1.5 M. However, the necessary amount of amine will of course depend on the H₂S level in the gas to be treated.

The absorbent solution should be substantially free of water when entering the absorption column. Accepted water content be in the range of 3-0.3% by weight and certainly the less water the better.

The absorption and stripping steps could be performed within wide temperature ranges. Useful operating temperatures during absorption were found to be 20-60°C, preferably 30-45°C. The operating temperatures during stripping should be in the range 100-200°C. These temperatures will depend somewhat on the glycol used in the absorbent solution and it was further found that generally less stripping gas will be necessary at lower temperatures.

When developing the new process, the inventors further found that the most preferred absorbent would be AMP. MEA was equally active, but is known to degenerate somewhat, especially if CO₂ is present with the H₂S. DEA was found to be less reactive, but even DEA could be used for a process that avoids increasing circulation rates.

The scope of the invention and its special features are as defined in the attached claims.

The invention will be further explained in connection with the description of the figures and the following examples.
- Figure 1:: This figure is a general flow sheet for the process according to the invention.
- Figure 2:: This figure shows alternative units to be used in a process according to figure 1.
- Figure 3:: This figure shows another alternative for units to be used in a process according to figure 1.

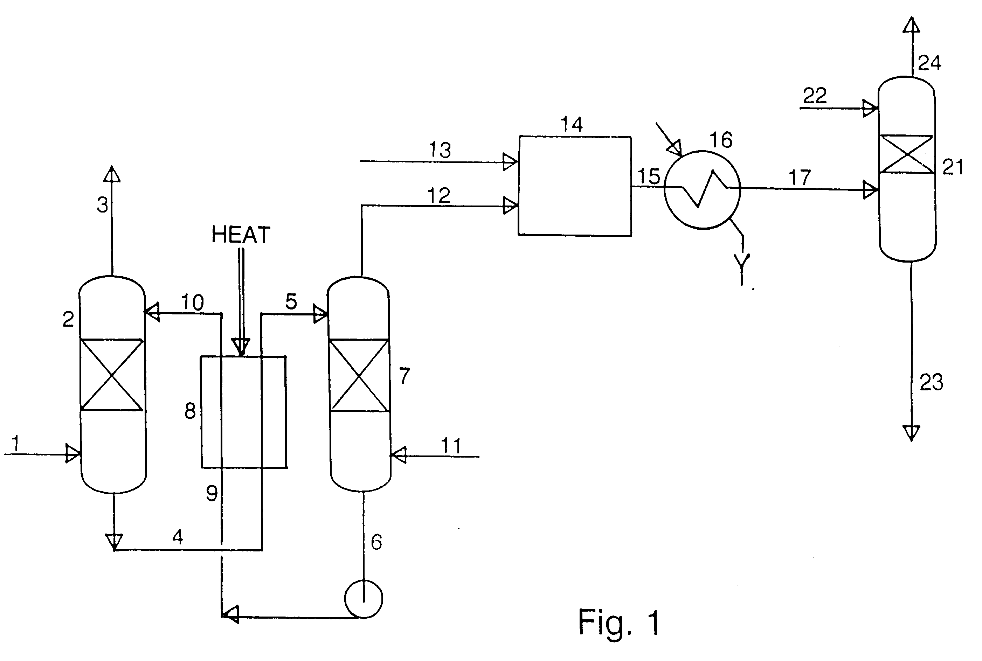

In figure 1 there is shown a process according to the invention in which raw natural gas is supplied through pipe 1 to an absorption column 2 to which is supplied an absorbent through pipe 10. The bottom fraction 4 from column 2 is heat exchanged in the heat exchanger system 8 and then supplied to column 7 as stream 5. Stripping gas 11 is supplied to column 7 and the purified liquid 6 leaves column 7 at its bottom and is transferred through pipe 9 to the unit 8 prior to its return to column 2. Purified gas having pipeline specifications leaves column 2 at its top as stream 3. The gas in pipe 12 containing removed H₂S and water enters the combustion chamber 14 to which is supplied air 13. The exhaust gas 15 is heat exchanged in exchanger 16 and entering column 21 as stream 17. Sea water 22 is supplied to the contact unit 21. Purified exhaust gas leaves unit 21 as stream 24 and sea water containing absorbed SO₂ is piped to the sea as stream 23.

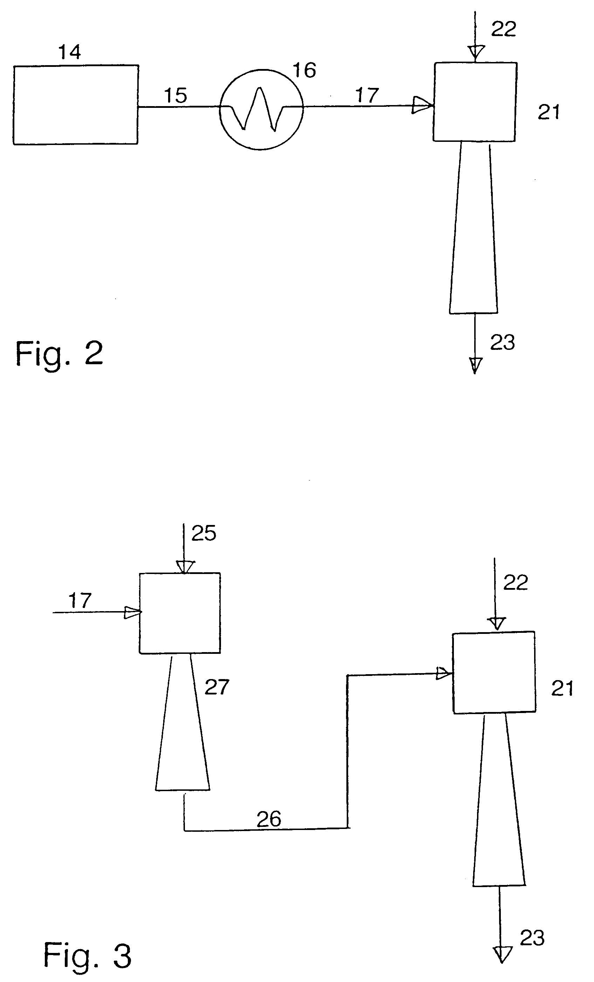

In figure 2 there is shown an alternative arrangement for removing SO₂ from the exhaust gas 17. In this case the contact between sea water supplied as stream 22 and exhaust gas 17 is performed in an ejector 21.

In figure 3 there is shown a further modification of performing the removal of SO₂ from the exhaust gas 17 which is brought in contact with sea water 25 in a first ejector 27 and the resulting mixed gas-liquid stream 26 enters a second ejector 21 to which further amounts of sea water 22 are supplied.

### Example 1

This example describes performance of a process according to the invention and as illustrated in figure 1.

1.6 10⁶ Sm³/day natural gas in pipe 1 at 40C and 70 bar containing 100 ppm H₂S and saturated with water is piped to a column 2 where it is contacted with stream 10 which is a 0.5 molar solution of methyl-diethanol-amine (MDEA) in TEG (32 m³/h) which absorbs the required amount of H₂S and water which is removed in stream 4 rendering a purified natural gas stream 3 ready to be piped. The purified natural gas contains 3.5 ppm H₂S and had a dew point of -14°C. The used absorbent 4 is heated in heat exchanger system 8 and piped to the top of a packed column 7 as stream 5. In the column 7 the absorbent is contacted with 480 Sm.³/h dry and H₂S free stripping gas 11 in a counter-current fashion at atmospheric pressure and 200C. The stripping gas used can be natural gas. The regenerated liquid 6 is pumped to the pressure of the absorption column and cooled in the heat exchanger system 8 before being recycled to the column 2. The used stripping gas 12 is piped to a combustion chamber 14 where it is mixed with air 13 (atmospheric pressure, 15C, and 10 kmol/h) before H₂S is converted to SO₂. The combustion exhaust gas 15 is at ∼1500°C, and it is cooled in heat exchanger 16. The resulting stream 19 is fed to a sea water contactor 21, where SO₂ is absorbed in sea water coming in as stream 22. The contactor 21 may be operated counter-currently or co-currently since only one stage is required. The sea water is at a temperature and pressure of 18C and 4 bar and the mass flow is 100 m³/h. The resulting stream 23 may be piped to the sea.

### Example 2

This example shows another embodiment of the invention as illustrated in figure 2.

The process was performed as in example 1, but with the following deviations. The contactor 21 was replaced with an ejector using sea water as the operating medium. The mass flow was approximately 500 m³/h, and the discharge pressure was kept at atmospheric pressure. The contactor 21 would then be operating co-currently. The use of an ejector provided a vacuum to the streams 17, 15, 12, and 13. The stripping column 7 would then be operating at 525 mm Hg. The necessary combustion air was sucked into the combustion chamber that now operated at a reduced pressure. This mode of the invention improves the stripping in column 7. The mass flow of stream 11 was hereby reduced to 370 Sm.³/h.

The purified gas contained 3.0 ppm H₂S and had a dew point of -12°C.

### Example 3

This example shows a process performed as in example 2 except that there was no cooler 16. The hot combustion exhaust gas was then fed directly to the modified ejector 21 which worked as cooler as well. The vacuum potential was then reduced to 600 mm Hg.

The purified gas contained 3.5 ppm H₂S and had a dew point of -10°C.

### Example 4

This example shows a process as described in either of the examples 2 and 3, but where the contactor 21 was split in two parts as shown in figure 3. Here stream 25 is 20 m³/h and stream 22 was 500 m³/h. This way of operating allows any material problems related to cooling of hot gas and sour condensate formation to be isolated to the small "first ejector" 27, which then can be constructed from highly corrosion resistant material at low cost.

The purified gas contained 3.5 ppm H₂S and had a dew point of -10°C.

### Example 5

This example shows a process performed as in example 1, except that the absorbent was changed to 1.0 M AMP in MEG. The circulation rate of the absorbent was now reduced to 1.46 m³/h. The stripping gas 11 to the desorber 7 was reduced to 22 Sm³/h. The amount of sea water applied corresponded to the quantity of H₂S and was accordingly not changed.

### Example 6

This example shows a process performed as in example 5, except that the absorbent was 1.0 M DEA in DEG. The circulation rate of the absorbent was now increased to 7.95 m³/h as a consequence of using DEA/DEG instead of AMP/MEG in example 5. The stripping gas 11 to the desorber 7 was increased to 120 m³/h. The amount of sea water applied is only related to the quantity of H₂S and was accordingly not changed.

### Example 7

This example shows a process performed as in example 5, except that now the absorbent was 1.0 M MEA in MEG. All the operating parameters remained substantially unchanged. The absorbent circulation rate was now 1.5 m³/h, and the stripping gas 11 was 22 Sm³/h. The sea water stream was unchanged.

### Example 8

This example shows a process performed as in example 1, except that the untreated gas contained 35 ppm H₂S. The circulating absorbent solution was 1.0 M AMP in DEG contrary to 0.5 M MDEA in TEG in example 1. The circulation rate was 1.5 m³/h and the gas was purified such that the treated gas only contained 3 ppm H₂S.

By the present invention the inventors have succeeded in arriving at a new process which simultaneously removes H₂S and water from natural gas down to pipeline specifications. The process can utilize, with minor, but essential modifications, equipment that inherently will be present for removing associated water. The integrated process also utilizes proven technology for removing SO₂ from the exhaust gas from the conversion of H₂S by combustion.

The process according to the invention represents an environmentally acceptable way of handling the sulphur. It might be pointed out that most of the sulphur in question came from sulphate in the injected sea water in the first place.

The new equipment, combustion chamber and sea water contactor, constitutes relatively small equipment parts. The sea water is foreseen as available in the form of spent cooling water on the platform. In the second embodiment when an ejector is applied, the need for a combustion fan is eliminated.

A further advantage with the new process is its utilization of well proven equipment parts, and that those parts that have to be made from high cost materials are relatively small size equipment resulting in overall low-cost equipment. The cost related to the invention is further kept low by utilizing equipment that already is required. It is emphasized that the burner and ejector are both small units in the context of gas processing.

## Claims

1. A process for the purification of natural gas to make it comply with gas or pipeline sales specifications comprising that the gas has a dew point between 0°C and -18°C and a H₂S content below 4 ppm by volume, wherein
H₂S and water are removed simultaneously from the natural gas in an absorption column where the gas is contacted with an amine-glycol solution, and wherein the amine-glycol solution then is heated, flashed and then brought in contact with a stripping gas to be freed of the water and H₂S, whereupon the stripping gas containing removed H₂S and water is combusted with air whereby the H₂S is converted to SO₂ which subsequently is absorbed in a contact unit to which sea water is supplied and brought in contact with the exhaust gas from the combustion unit, whereby the SO₂ is converted to sodium sulphite.

2. A process according to claim 1,
**characterized in that**
the absorption solution is a mixture of a primary and/or secondary alkanolamine in mono-, di- and/or triethylene glycol and that the concentration of amine in the glycol is in the range of 0.2-2.5 mole.

3. A process according to claim 1,
**characterized in that**
the exhaust gas is contacted with sea water in a sea water driven ejector, and where the ensuing vacuum is utilized providing reduced pressure for the stripping process of the solution.

4. A process according to claim 1,
**characterized in that**,
the stripping gas flow or stripping temperature is reduced by application of the vacuum created by the ejector.

5. A process according to claim 1,
**characterized in that**
the SO₂ absorption from the exhaust gas is effected in a liquid driven ejector that functions as a combined absorber and vacuum source.

6. A process according to claim 1,
**characterized in that**
the exhaust gas is cooled between the combustion chamber and the ejector thus reducing the volume of gas to be treated in the ejector.

7. A process according to claim 1,
**characterized in that**
the primary amine is 2-amino-2-methyl-1-propanol.

8. A process according to claim 1,
**characterized in that**
the absorption solution is a mixture of a primary alkanolamine and monoethylene glycol and that the concentration of amine is 0.5-1.5 mole.

## Patentansprüche

1. Verfahren für die Reinigung von Erdgas, um es in Einklang mit den Spezifikationen bezüglich des Verkaufs von Gas oder von Rohrleitungen zu bringen, welches impliziert, daß das Gas einen Taupunkt zwischen 0°C und -18°C und einen Gehalt an H₂S von weniger als 4 ppm als Volumeneinheit aufweist, wobei gemäß demselben H₂S und Wasser gleichzeitig aus dem Erdgas im Innern einer Absorptionskolonne entfernt werden worin das Gas mit einer Lösung Amin-Glykol in Berührung gebracht wird und wobei gemäß demselben die Lösung Amin-Glykol daraufhin erhitzt, verspritzt und dann mit einem Strippgas In Kontakt gebracht wird, um von dem Wasser und von dem H₂S befreit zu werden, woraufhin das entferntes H₂S und Wasser enthaltende Strippgas mit Luft verbrannt wird wodurch das H₂S in SO₂ umgewandelt wird, welches anschließend in einer Kontakteinheit absorbiert wird in welche Meerwasser eingeführt wird und in Kontakt mit dem Abgas aus der Verbrennungseinheit gebracht wird, wodurch das SO₂ in Natriumsulfit umgewandelt wird.

2. Verfahren gemäß Patentanspruch 1, dadurch gekennzeichnet, daß die Absorptionslösung eine Mischung aus einem primären und/oder sekundären Alkanolamin in Mono-, Di- und/oder Triethylenglykol ist, und daß die Konzentration von Amin in dem Glykol im Bereich von 0,2-2,5 Mol liegt.

3. Verfahren gemäß Patentanspruch 1, dadurch gekennzeichnet, daß das Abgas in einem mit Hilfe von Meerwasser angetriebenen Ejektorgerät mit Meerwasser in Berührung gebracht wird, und wobei das sich daraus ergebende Vakuum benutzt wird und einen verringerten Druck für den Vorgang des Strippens der Lösung liefert.

4. Verfahren gemäß Patentanspruch 1, dadurch gekennzeichnet, daß der Durchfluß von Strippgas oder die Temperatur des Strippens, als Folge des Einsatzes des von dem Ejektorgerät erzeugten Vakuums, heruntergesetzt werden.

5. Verfahren gemäß Patentanspruch 1, dadurch gekennzeichnet, daß die Absorption von SO₂ aus dem Abgas in einem mittels einer Flüssigkeit betriebenen Ejektorgerät erfolgt, welches als eine Kombination von Absorptionsgerät und Vakuumquelle funktioniert.

6. Verfahren gemäß Patentanspruch 1, dadurch gekennnzeichnet, daß das Abgas zwischen der Verbrennungskammer und dem Ejektorgerät abgekühlt wird und so das Volumen des in dem Ejektorgerät zu behandelnden Gases vermindert wird.

7. Verfahren gemäß Patentanspruch 1, dadurch gekennzeichnet, daß das primäre Amin das 2-Amino-2-Methyl-1-Propanol ist.

8. Verfahren gemäß Patentanspruch 1, dadurch gekennzeichnet, daß die Absorptionslösung eine Mischung aus einem primären Alkanolamin und Monoethylenglykol ist, und daß die Konzentration des Amins 0,5-1,5 Mol beträgt.

## Revendications

1. Procédé pour la purification de gaz naturel afin de le rendre conforme aux spécifications de vente de gaz ou de pipe-lines, prévoyant que le gaz ait un point de rosée entre 0°C et -18°C et une teneur en H₂S inférieure à 4 ppm en volume, suivant lequel de l'H₂S et de l'eau sont simultanément éliminés du gaz naturel dans une colonne d'absorption où le gaz est mis en contact avec une solution amine-glycol, et suivant lequel la solution amine-glycol est ensuite chauffée, évaporée rapidement et alors amenée en contact avec un gaz de rectification destiné à être libéré de l'eau et de l'H₂S, après quoi le gaz de rectification contentant l'H₂S et l'eau éliminés est brûlé avec de l'air en conséquence de quoi l'H₂S est converti en SO₂ qui est absorbé par la suite dans une unité de contact à laquelle de l'eau est mer est fournie et mise en contact avec le gaz d'échappement de l'unité de combustion, en conséquence de quoi le SO₂ est converti en sulfite de sodium.

2. Procédé suivant la revendication 1, caractérisé en ce que la solution d'absorption est un mélange d'une alkanolamine primaire et/ou secondaire dans du mono-, di- et/ou triéthylèneglycol et que la concentration d'amine dans le glycol est comprise dans l'intervalle allant de 0,2 à 2,5 mole.

3. Procédé suivant la revendication 1, caractérisé en ce que le gaz d'échappement est mis en contact avec de l'eau de mer dans un éjecteur actionné par de l'eau de mer, et que le vide qui s'ensuit est utilisé pour fournir une pression réduite pour le procédé de rectification de la solution.

4. Procédé suivant la revendication 1, caractérisé en ce que le courant de gaz de rectification ou la température de rectification sont diminués par application du vide créé par l'éjecteur.

5. Procédé suivant la revendication 1, caractérisé en ce que l'absorption de SO₂ du gaz d'échappement est effectuée dans un éjecteur qui est actionné par du liquide et qui fonctionne comme une source combinée d'absorption et de vide.

6. Procédé suivant la revendication 1, caractérisé en ce que le gaz d'échappement est refroidi entre la chambre de combustion et l'éjecteur, réduisant ainsi le volume de gaz devant être traité dans l'éjecteur.

7. Procédé suivant la revendication 1, caractérisé en ce que l'amine primaire est du 2-amino-2-méthyle-1-propanol.

8. Procédé suivant la revendication 1, caractérisé en ce que la solution d'absorption est un mélange d'une alkanolamine primaire et de monoéthylèneglycol et que la concentration de l'amine est comprise dans l'intervalle allant de 0,5 à 1,5 mole.
